# EUROPEAN PATENT APPLICATION

(11) **EP 4 556 286 A1**
(43) Date of publication of application: **21.05.2025**
(21) Application number: 23210033.9
(22) Date of filing: 15.11.2023
(51) Int. Cl.: B60L 1/10, B60L 15/00, B60L 50/53, H02M 3/158

(54) **METHOD AND CONTROLLER FOR OPERATING A PROPULSION SYSTEM OF A RAILWAY VEHICLE, AND PROPULSION SYSTEM**

(71) Applicant: ABB SCHWEIZ AG, 5400 Baden (CH)
(72) Inventor: HUGGENBERGER, Thomas, 5417 Untersiggenthal (CH); WICKI, Stefan, 5702 Niederlenz (CH); ALSANCAK, Burak, 34854 Istanbul (TR)
(74) Representative: Sykora & König Patentanwälte PartG mbB

(57) **Abstract**

A method for operating a propulsion system (10) of a railway or heavy haul vehicle in a catenary (12) mode is described. The propulsion system (10) comprises a first DC link (20) electrically coupling the propulsion system (10) to a catenary (12), a second DC link (30) electrically coupled to a traction battery system (14) of the railway or heavy haul vehicle, a first half-bridge (22) electrically coupled to the first DC link (20), a second half-bridge (32) electrically coupled to the second DC link (30), and an inductance (40) electrically coupling the first half-bridge (22) to the second half-bridge (32). The method comprises: receiving a first voltage signal which is representative of a first voltage provided by the catenary (12); receiving a second voltage signal which is representative of a second voltage provided by the traction battery system (14); comparing the first voltage with the second voltage; using the first half-bridge (22) as a step-down converter to reduce the first voltage to the second voltage, when the first voltage is higher than the second voltage; and using the second half-bridge (32) as a step-up converter to increase the first voltage to the second voltage, when the second voltage is lower than the first voltage.

## Description

### FIELD OF THE INVENTION

The invention relates to the field of propulsion systems for railway and/or heavy haul vehicles. In particular, the invention relates to a method and to a controller for operating a propulsion system of a railway or heavy haul vehicle in a catenary mode, and to the propulsion system comprising the controller.

### BACKGROUND OF THE INVENTION

The railway vehicle may be a DC railway vehicle. The heavy haul vehicle may be a bus, lorry or truck. The propulsion system, in particular the controller of the propulsion system, may be referred to as traction battery voltage control system. In many cases, the vehicles, in particular the DC railway or heavy haul vehicles, are electrically couplable with a catenary, e.g. via a pantograph of the corresponding vehicle. The catenary may provide electric energy from an electric grid to the vehicle, when they are electrically coupled to each other. In addition, some vehicles, in particular DC railway or heavy haul vehicles, e.g. track maintenance vehicles or Light Rail Vehicles, mining dump trucks, are equipped with traction batteries for an operation of the corresponding vehicle on non-electrified sections, e.g. when no catenary is available and/or when no energy may be provided by the catenary, e.g. when the grid fails. For switching between a catenary mode, in which the energy is supplied from the grid, and a battery mode, in which the energy is supplied from the traction batteries, it is known to equip the propulsion system with one or multiple converters, each comprising at least one DC-link capacitor, wherein the DC links may be coupled with each other or may be decoupled from each other depending on the actual needs. In addition, the two connectable and disconnectable DC links may provide redundancy in case of a failure of the grid, motors, the traction battery, or the converters themselves.

A first voltage provided by the grid normally differs more or less from a second voltage provided by the traction batteries. This may be a problem in some situations, e.g. when charging the traction batteries via the electric energy from the catenary. Therefore, it is known to use low voltage traction batteries with a maximum voltage, e.g. about 400 V, that is lower than a minimum voltage of the grid and to connect these low voltage batteries to a main converter of the propulsion system via a dedicated buck converter. Such low voltage traction batteries may be referred to as "string batteries". However, this may result in an insufficient battery capacity, additional costs and/or a high space consumption per amount of energy. As an alternative, it is known to use a dedicated DC/DC buck-boost converter instead of the buck converter only. In this case, traction batteries providing similar or higher voltages as the grid can be used for the corresponding railway vehicle. However, providing the dedicated DC/DC buck-boost converter involves additional costs and needs space which is not available in every railway and/or heavy haul vehicle.

### DESCRIPTION OF THE INVENTION

It is an objective of the present invention to provide a method and a controller for operating a propulsion system of a railway or heavy haul vehicle in a catenary mode, which enables to use a simple, cost efficient, and space saving propulsion system and/or one or more high voltage traction batteries for driving one or more motors of the corresponding vehicle. It is another objective of the present invention to provide a propulsion system comprising the controller.

These objectives are achieved by the subject-matter of the independent claims. Further exemplary embodiments are evident from the dependent claims and the following description.

An aspect relates to a method for operating a propulsion system of a railway and/or heavy haul vehicle in a catenary mode. The propulsion system comprises a first DC link electrically coupling the propulsion system to a catenary, a second DC link electrically coupled to a traction battery system of the railway vehicle, a first half-bridge electrically coupled to the first DC link, a second half-bridge electrically coupled to the second DC link, and an inductance electrically coupling the first half-bridge to the second half-bridge. The method comprises receiving a first voltage signal which is representative of a first voltage provided by the catenary; receiving a second voltage signal which is representative of a second voltage provided by the traction battery system; comparing the first voltage with the second voltage; using the first half-bridge as a step-down converter to reduce the first voltage to the second voltage, when the first voltage is higher than the second voltage; and using the second half-bridge as a step-up converter to increase the first voltage to the second voltage, when the first voltage is lower than the second voltage.

In the catenary mode, the propulsion system is electrically coupled to the catenary and receives the energy for driving one or more motors and/or one or more auxiliary (electric) consumers of the railway vehicle from the catenary. In order to receive the electric energy from the catenary, the first DC link may be electrically coupled to the catenary via a pantograph of the railway or, respectively, heavy haul vehicle. In the catenary mode, the energy provided by the catenary may directly be provided to the motors and the auxiliary consumers of the railway vehicle. In contrast, in a non-catenary mode, also referred to as battery mode, the propulsion system is electrically coupled to the traction battery system and receives the energy for driving the motors and the other electric consumers of the railway vehicle from the traction battery system. When the propulsion system is operated in the non-catenary mode, both of the half-bridges may be deactivated and the second voltage from the traction battery system may be applied to both of the DC links.

So, when the railway or heavy haul vehicle is operated in the catenary mode and the first voltage is higher than the second voltage, the propulsion system may power one or more first (electric) motors of the corresponding vehicle and in case one or more first auxiliary (electric) consumers, which are connected to the first DC link and the first half-bridge, with the first voltage directly. Simultaneously, the step-down converter provided by the first half-bridge is operated to reduce the first voltage to a voltage level of the second voltage, which may be used to charge the traction battery system and/or to power one or more second (electric) motors and in case one or more second (electric) consumers of the railway vehicle, which are connected to the second half-bridge and/or the second DC link. In contrast, when the railway or heavy haul vehicle is operated in the catenary mode and the first voltage is lower than the second voltage, the described operating principle stays the same except for the step-down converter being inactive and the step-up converter being operated to increase a level of the first voltage to an actual level of the second voltage. In the non-catenary operating mode, both half-bridges and as such the corresponding converters are inactive and the second voltage will just feed both DC-links at the level of the second voltage.

The method may be carried out by a controller of the railway or heavy haul vehicle, as explained below. Optionally, the method may be started in reaction to receiving a catenary mode signal which is representative of the railway or, respectively, heavy haul vehicle being in the catenary mode. Alternatively, the controller itself may switch from the catenary mode to the non-catenary mode such that the controller already "knows" whether the corresponding vehicle is in the catenary mode or not.

The propulsion system may comprise two or more further converters, wherein one or more first converters may be connected to the first DC link and one or more second converters may be connected to the second DC link. The traction battery system may comprise one or more traction batteries coupled with each other. The auxiliary consumers may be any electric consumers arranged in the railway or heavy haul vehicle, as e.g. a heating or lighting of the corresponding vehicle. The inductance may comprise an inductor, in particular a dedicated inductor, e.g. a coil. Alternatively, the inductance may be provided by one or more of the motors of the railway vehicle, as explained further below.

In general, the first and second DC links may be coupled with each other or may be decoupled from each other. For example, when no energy can be provided by the catenary, the first and second DC links may be decoupled from each other, and the propulsion system may be provided with energy provided by the traction battery system. In contrast, when no energy can be provided by the traction battery system, the first and second DC links may be decoupled from each other, and the propulsion system may be provided with energy provided by the catenary.

The present invention targets to make use of the two circuits provided by the first DC link and the first half-bridge on one side, and the second DC link and the second half-bridge on the other side to accommodate two different system voltages, one corresponding to the potential of the catenary and one corresponding to the potential of the traction battery system. Such a propulsion system and the method for operating the propulsion system allows to use a traction battery system providing a similar voltage as the catenary despite normal voltage variations during an operation of the railway vehicle, in which the traction battery system may temporarily provide lower or higher voltages compared to catenary, because the proposed propulsion system is able to convert the voltage accordingly, when operated in accordance with the method.

In addition, it is no longer needed to select a traction battery providing a maximum voltage lower than a minimum voltage provided by the catenary. This may enable the utilization of very economic and standardized battery designs, the latter because less different battery voltages are needed. Compared to earlier implementations of dedicated buck-boost converters, the propulsion system and the method for operating the propulsion system avoid the costs and the weight of additional parts, as e.g. the buck and/or boos converters, by utilizing already existing parts of known propulsion system to compose an additionally needed functionality of a DC/DC converter. Further, a structure of the propulsion system may be kept very simple and space saving.

The DC catenary option provided by the method may be integrated in existing propulsion system designs without changing a type of the traction battery system and/or without adding an additional DC converter box. This allows a builder of the railway vehicle to standardize their vehicle architecture independently from the power system.

According to an embodiment, the first half-bridge is used as the step-down converter by sending a first control signal to the first half-bridge, and the first control signal comprises a first modulation being representative of a first amplification factor corresponding to the reduction of the first voltage to the second voltage. The first control signal having the first modulation may enable to use the first half-bridge as the step-down converter in an easy way. So, the first half-bridge may function as the step-down converter when being supplied with the first control signal being modulated accordingly.

According to an embodiment the first control signal is configured such that a first phase of the first half-bridge is switched between positive and negative potential in accordance with the first modulation. This may contribute to provide an accurate modulation for using the first half-bridge as the step-down converter. So, the first modulation may be representative for switching instants and/or durations of one or more semiconductor switches of the first half-bridge.

According to an embodiment a second phase of the second half-bridge is kept on the positive potential, while the first half-bridge is used as the step-down converter. This may contribute to provide the accurate modulation for using the first half-bridge as the step-down converter.

According to an embodiment the second half-bridge is used as the step-up converter by sending a second control signal to the second half-bridge, and the second control signal comprises a second modulation being representative of a second amplification factor corresponding to the increment of the first voltage to the second voltage. The second control signal having the second modulation may enable to use the second half-bridge as the step-up converter in an easy way. So, the second half-bridge may function as the step-up converter when being supplied with the second control signal being modulated accordingly.

According to an embodiment the second control signal is configured such that a second phase of the second half-bridge is switched between positive and negative potential in accordance with the second modulation. This may contribute to provide an accurate modulation for using the second half-bridge as the step-up converter. So, the second modulation may be representative for switching instants and/or durations of one or more semiconductor switches of the second half-bridge.

According to an embodiment a first phase of the first half-bridge is kept on the positive potential, while the second half-bridge is used as the step-up converter. This may contribute to provide the accurate modulation for using the second half-bridge as the step-up converter.

According to an embodiment the method comprises controlling the first half-bridge and/or the second half-bridge such that at least one traction battery of the traction battery system is charged by the energy provided by the catenary while using the first half-bridge as the step-down converter or when using the second half-bridge as the step-up converter. The first and/or second half-bridge may be controlled such that at least one traction battery of the battery system is charged by the energy provided by the catenary by generating a corresponding charging signal to the first and, respectively, second half-bridge, and/or one or more further converters of the propulsion system. The traction battery system may be discharged by keeping the first and second half-bridge at the positive potential and by connecting the first and second DC links to the traction battery system.

According to an embodiment the first half-bridge is electrically coupled to and configured for driving at least a first one of the auxiliary consumers of the railway or heavy haul vehicle, and the second half-bridge is electrically coupled to and configured for driving a second one of the auxiliary consumers of the corresponding vehicle, and the method comprises driving the first auxiliary consumer by the first voltage from the catenary and driving the second auxiliary consumer by the reduced first voltage, while using the first half-bridge as the step-down converter; and driving the first auxiliary consumer by the first voltage from the catenary and driving the second auxiliary consumer by the increased first voltage, while using the first half-bridge as the step-up converter. The first electric consumer may comprise a first motor arrangement and optionally a first set of auxiliary consumers. The first motor arrangement may comprise one or more first electric motors. The second electric consumer may comprise a second motor arrangement and optionally a second set of auxiliary consumers. The second motor arrangement may comprise one or more second electric motors.

An aspect relates to the controller for operating the propulsion system of the railway and/or heavy haul vehicle in the catenary mode. The propulsion system comprises the first DC link electrically coupling the propulsion system to the catenary, the second DC link electrically coupled to the traction battery system of the corresponding vehicle, the first half-bridge electrically coupled to the first DC link, the second half-bridge electrically coupled to the second DC link, and the inductance electrically coupling the first half-bridge to the second half-bridge. The controller comprises an interface for receiving the first voltage signal, which is representative of the first voltage provided by the catenary, and the second voltage signal, which is representative of the second voltage provided by the traction battery system; a memory for storing information about the first voltage and about the second voltage; and a processor being electrically coupled to the interface and the memory and being configured for carrying out the method in accordance with one of the preceding claims.

An aspect relates to the propulsion system for the railway and/or heavy haul vehicle. The propulsion system comprises the first DC link for electrically coupling the propulsion system to the catenary, the second DC link electrically coupled to the traction battery system of the corresponding vehicle, the first half-bridge electrically coupled to the first DC link, the second half-bridge electrically coupled to the second DC link, the inductance electrically coupling the first half-bridge to the second half-bridge, and the above controller.

According to an embodiment the inductance is provided by the inductor, in particular the dedicated inductor, such as the coil, electrically connecting the first DC link to the second DC link.

According to an embodiment the inductance is provided by at least one electric motor of the railway or heavy haul vehicle. So, the inductance may be provided by utilizing two ends of 3-phase traction motor windings of one or more of the motors. This contribute to provide the space saving propulsion system, because no dedicated inductor hast to be arranged to provide the inductance.

An aspect relates to a computer program for operating the propulsion system of the railway or heavy haul vehicle in the catenary mode, wherein the computer program is configured for carrying out the above method, when being executed by the processor of the controller.

An aspect relates to a computer-readable medium, on which the above computer program is stored. The computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. The computer readable medium may also be a data communication network, e.g. the Internet, which allows downloading a program code. In general, the computer-readable medium may be a non-transitory or transitory medium.

Some features, technical effects, and/or advantages of the present invention are described in this application text with respect to one of the above aspects only, in order to provide a concise description of the present invention and to avoid any unnecessary repetitions. However, a person skilled in the art will recognize that these features may easily be transferred from one of the aspects to another one of the aspects.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig. 1 shows a block diagram of a propulsion system for a railway or heavy haul vehicle, in accordance with an embodiment of the present invention;
Fig. 2 shows a detailed block diagram of an interconnection of two sub-systems of the propulsion system of figure 1;
Fig. 3 shows a flowchart of an exemplary embodiment of a method for operating the propulsion system of figure 1 in a catenary mode;
Fig. 4 shows a block diagram of a propulsion system for a railway or heavy haul vehicle, in accordance with an embodiment of the present invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

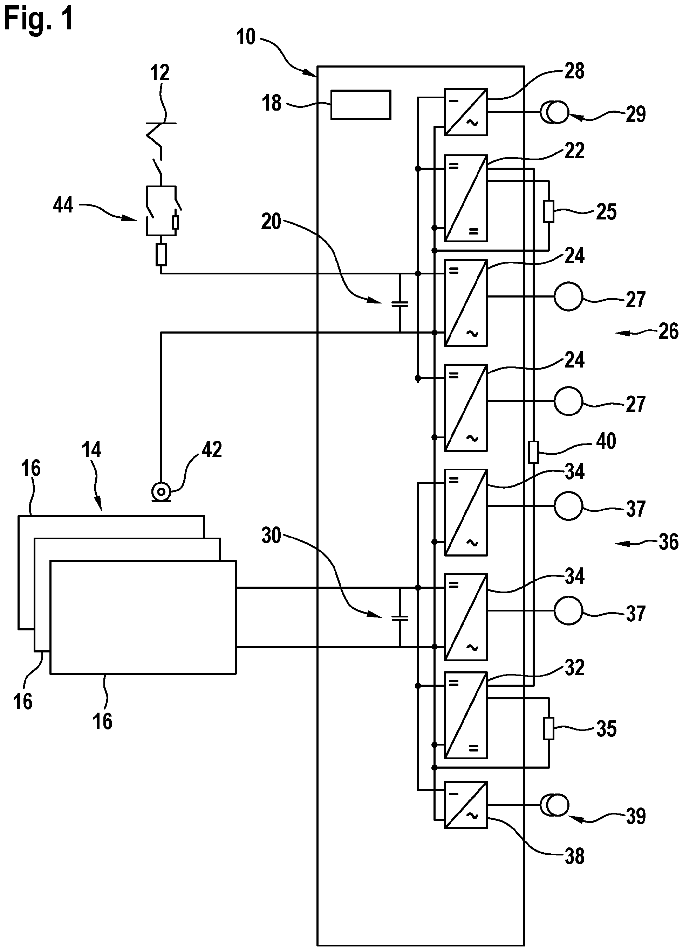

**Fig. 1** shows a block diagram of a propulsion system 10 for a railway vehicle and/or heavy haul vehicle (not shown), in accordance with an embodiment of the present invention.

The railway vehicle may be a DC railway vehicle, e.g. an electric train, a subway, or a tram. The heavy haul vehicle may be a bus, a lorry, or a truck, e.g. a mining dump truck. The railway vehicle and/or heavy haul vehicle, which may be referred to as "vehicle" only in the following, is electrically couplable with a catenary 12, e.g. via a pantograph (not shown) of the vehicle. The catenary 12 may provide electric energy from an electric grid to the vehicle, when they are electrically coupled to each other. In addition, the vehicle is equipped with a traction battery system 14 for an operation of the vehicle on non-electrified sections, e.g. when the catenary 12 is not available and/or when no energy can be provided by the catenary 12, e.g. when the grid fails. A mode of operation during which the vehicle is supplied with energy from the catenary may be referred to as catenary mode. A mode of operation during which the railway vehicle is supplied with energy from the traction battery system 14 may be referred to as battery mode.

The propulsion system 10 comprises a first DC link 20, a second DC link 30, a first half-bridge 22, a second half-bridge 32, and an inductance 40. The propulsion system 10 may comprise a controller 18. The propulsion system 10, in particular the controller 18, may be referred to as traction battery voltage control system. In addition to the first and second half-bridges 22, 32, the propulsion system 10 may comprise two or more further converters, wherein one or more first converters 24 may be connected to the first DC link 20 and one or more second converters 34 may be connected to the second DC link 30. The first converters 24 may be electrically coupled to the first half-bridge 22 by a first resistor 25. The second converters 34 may be electrically coupled to the second half-bridge 32 by a second resistor 35.

The first DC link 20 is configured for electrically coupling the propulsion system 10 to the catenary 12. The first half-bridge 22 is electrically coupled to the first DC link 20. In addition, the first DC link 20 is electrically coupled to ground 42. The second DC link 32 is electrically coupled to the traction battery system 14 of the railway vehicle. The second half-bridge 32 is electrically coupled to the second DC link 30. In addition, the first DC link 20 is electrically coupled to ground 42. Each of the DC links 20, 30 may comprise at least one capacitor.

The propulsion system 10 is electrically coupled to a set of electric consumers of the railway vehicle. The electric consumers may comprise one or more motor arrangements and optionally one or more auxiliary consumers. The motor arrangements may comprise a first motor arrangement 26 and a second motor arrangement 36. The first motor arrangement 26 may comprise one or more first electric motors 27. The second motor arrangement 36 may comprise one or more second electric motors 37. The auxiliary consumers may comprise first auxiliary consumers 29 and second auxiliary consumers 39. The first and second auxiliary consumers 29, 39 may be any electric consumers arranged in the railway vehicle, as e.g. a heating or lighting of the railway vehicle.

The first half-bridge 22 may be electrically coupled to and configured for driving one or more of the first auxiliary consumers 29 of the railway vehicle. The first half-bridge 22 may be electrically coupled to the first auxiliary consumers 29 by a first auxiliary on-board converter 28. The second half-bridge 32 may be electrically coupled to and configured for driving one or more of the second auxiliary consumers 39 of the railway vehicle. The second half-bridge 32 may be electrically coupled to the second auxiliary consumers 39 by a second auxiliary on-board converter 38.

The inductance 40 electrically couples the first half-bridge 22 to the second half-bridge 32. The inductance 40 may comprise an inductor, in particular a dedicated inductor, e.g. a coil. the inductance is provided by the inductor, in particular the dedicated inductor, such as the coil, electrically connecting the first DC link to the second DC link.

The traction battery system 14 may comprise one or more traction batteries 16 coupled with each other.

The controller 18 comprises an interface, a memory and a processor and is configured for carrying out the method for operating the propulsion system 10 in the catenary mode.

The propulsion system 10 may be electrically coupled to the catenary 12 via a coupling arrangement 44 of the railway vehicle, as they are known and widely used in the art.

The first and second DC links 20, 30 may be coupled with each other or may be decoupled from each other depending on the needs of the railway vehicle. In particular, in the catenary mode, the propulsion system 10 is electrically coupled to the catenary 12 and receives the energy for driving one or more of the electric consumers of the railway vehicle from the catenary 12. In order to receive the electric energy from the catenary 12, the first DC link 20 may be electrically coupled to the catenary 12 via the pantograph of the railway vehicle. So, in the catenary mode, the energy provided by the catenary 12 may directly be provided to the first and/or second motors 27, 37, and/or to the first and/or second auxiliary consumers 29, 39 of the railway vehicle. For example, the railway vehicle may be operated in the catenary mode when no energy can be provided by the traction battery system 16 or when the traction battery system 16 is charged by energy from the catenary 12. In this case, the first and second DC links 20, 30 may be coupled with each other, and the propulsion system 10 may be provided with energy provided by the catenary 12.

In contrast, when no energy can be provided by the catenary 12, the railway vehicle may be operated in the battery mode. In this case, the first and second DC links 20, 30 may be decoupled from each other, and the propulsion system 10 may be provided with energy provided by the traction battery system 14. So, in the battery mode, the propulsion system 10 is electrically coupled to the traction battery system 14 and receives the energy for driving the motors 27, 37 and the other electric consumers 29, 39 of the railway vehicle from the traction battery system 14. When the propulsion system 10 is operated in this non-catenary mode, both of the half-bridges 22, 32 may be deactivated and a potential of the traction battery system 14 may be applied to both of the DC links 30, 30.

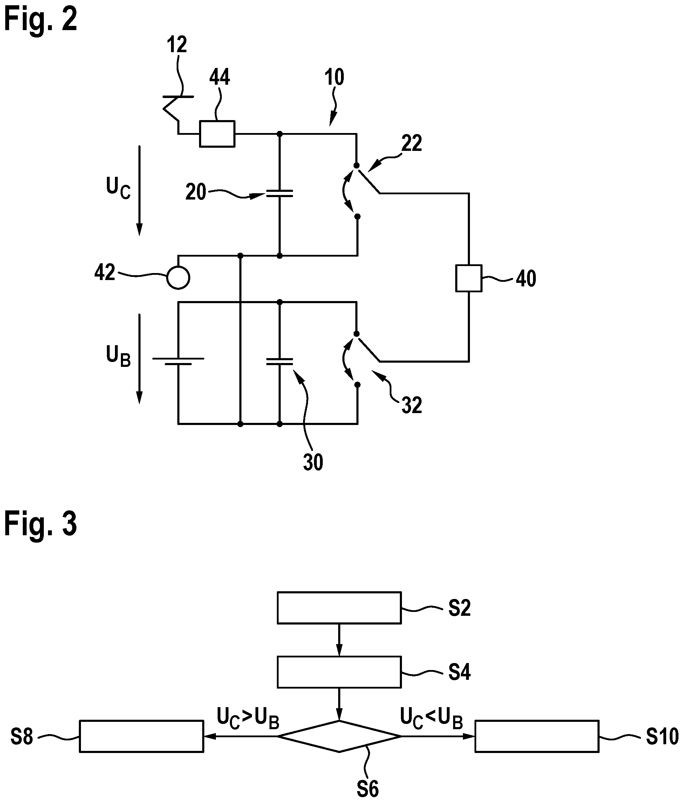

**Fig. 2** shows a simplified block diagram of the propulsion system 10 of figure 1. The first half-bridge 22 is depicted as a first switch and the second half-bridge 32 is depicted as a second switch. Figure 2 is used in the following to explain a principle of a method for operating the propulsion system 10 of figure 1 in the catenary mode.

**Fig. 3** shows a flowchart of an exemplary embodiment of the method for operating the propulsion system 10 of figure 1 in the catenary mode. The method may be carried out by the controller 18. Optionally, the method may be started in reaction to receiving a catenary mode signal which is representative of the railway vehicle being in the catenary mode. Alternatively, the controller 18 itself may switch from the catenary mode to the non-catenary mode such that the controller 18 already "knows" whether the railway vehicle is in the catenary mode or not.

In the catenary mode, the energy provided by the catenary 12 may directly be provided to the motors 27, 37 and the auxiliary consumers 29, 39 of the railway vehicle. In contrast, in the battery mode, the propulsion system is electrically coupled to the traction battery system 14 and receives the energy for driving the motors 27, 37 and the other electric consumers 29, 39 of the railway vehicle from the traction battery system 14.

In step S2, a first voltage signal which is representative of a first voltage, which may be referred to as catenary voltage Uc, provided by the catenary 12 may be received, e.g. by the controller 18. The first voltage may be sensed by a first voltage sensor (not shown). The first voltage sensor may generate the first voltage signal depending on the sensed first voltage.

In step S4, a second voltage signal which is representative of a second voltage, which may be referred to as battery voltage U_{B}, provided by the traction battery system 14 may be received, e.g. by the controller 18. The second voltage may be sensed by a second voltage sensor (not shown). The second voltage sensor may generate the second voltage signal depending on the sensed second voltage. Alternatively, the same voltage sensor may be used for sensing the first and second voltages.

In step S6, the first voltage, i.e. the catenary voltage Uc, may be compared with the second voltage, i.e. the battery voltage U_{B}. If the first voltage is higher than the second voltage, the method proceeds in step S8. If the first voltage is lower than the second voltage, the method proceeds in step S10.

In step S8, the first half-bridge 22 is used as a step-down converter to reduce the first voltage to the second voltage, when the first voltage is higher than the second voltage. For example, the first half-bridge 22 may be used as the step-down converter by the controller 18 sending a first control signal to the first half-bridge 22, wherein the first control signal comprises a first modulation being representative of a first amplification factor corresponding to the reduction of the first voltage to the second voltage. In particular, the first control signal may be configured such that a first phase of the first half-bridge 22 is switched between positive and negative potential in accordance with the first modulation, as shown in figure 2. Further, in step S8, a second phase of the second half-bridge 32 may kept on the positive potential, while the first half-bridge 22 is used as the step-down converter. While the first half-bridge 22 is used as the step-down converter, the first auxiliary consumers 29 may be driven by the first voltage from the catenary 12 and the second auxiliary consumers 39 may be driven by the reduced first voltage.

In step S10, the second half-bridge 32 may be used as a step-up converter to increase the first voltage to the second voltage, when the first voltage is lower than the second voltage. For example, the second half-bridge 32 may be used as the step-up converter by sending a second control signal to the second half-bridge 32. The second control signal may comprise a second modulation being representative of a second amplification factor corresponding to the increment of the first voltage to the second voltage. In particular, the second control signal may be configured such that a second phase of the second half-bridge 32 is switched between positive and negative potential in accordance with the second modulation, as shown in figure 2. Further, in step S10, a first phase of the first half-bridge 22 may be kept on the positive potential, while the second half-bridge 32 is used as the step-up converter. While the second half-bridge 32 is used as the step-up converter, the first auxiliary consumers 29 by be driven by the first voltage from the catenary 12 and the second auxiliary consumers 39 may be driven by the increased first voltage.

Optionally, the first half-bridge 22 and/or the second half-bridge 32 may be controlled such that at least one of the traction batteries 16 of the traction battery system 14 is charged by the energy provided by the catenary 12, while using the first half-bridge 22 as the step-down converter or while using the second half-bridge 32 as the step-up converter. The first and/or second half-bridge 22, 32 may be controlled such that the at least one traction battery 16 is charged by the energy provided by the catenary 12 by generating a corresponding charging signal to the first and, respectively, second half-bridge 22, 32, and/or one or more of the further converters 24, 34 of the propulsion system 10. In contrast, the traction battery system 14 may be discharged by keeping the first and second half-bridges 22, 32 at the positive potential and by connecting the first and second DC links 20, 30 to the traction battery system 14.

When the propulsion system 10 is operated in the non-catenary mode, both of the half-bridges 22, 32 may be deactivated and the second voltage from the traction battery system 14 may be applied to both of the DC links 20, 30.

So, when the railway vehicle is operated in the catenary mode and the first voltage is higher than the second voltage, the propulsion system 10 may power one or more of the first (electric) motors 27 and in case one or more of the first auxiliary (electric) consumers 29, which are connected to the first DC link 20 and the first half-bridge 22, with the first voltage directly. Simultaneously, the step-down converter provided by the first half-bridge 22 is operated to reduce the first voltage to a voltage level of the second voltage, which may be used to charge the traction battery system 14 and/or to power one or more of the second (electric) motors 37 and in case one or more of the second (electric) consumers 39 of the railway vehicle, which are connected to the second half-bridge 32 and/or the second DC link 20. In contrast, when the railway vehicle is operated in the catenary mode and the first voltage is lower than the second voltage, the described operating principle stays the same except for the step-down converter being inactive and the step-up converter being operated to increase a level of the first voltage to an actual level of the second voltage. In the non-catenary operating mode, both half-bridges 22, 32 and as such the corresponding converters 24, 34 may be inactive and the second voltage will just feed both DC-links at the level of the second voltage.

The steps of the above method may be described by a computer program for operating the propulsion system of the railway vehicle in the catenary mode. In particular, the computer program may be configured such that the above method is carried out, e.g. by the controller 18, when the computer program is executed by the processor of the controller 18.

The above computer program may be stored on a computer-readable medium. The computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. The computer readable medium may also be a data communication network, e.g. the Internet, which allows downloading a program code. In general, the computer-readable medium may be a non-transitory or transitory medium.

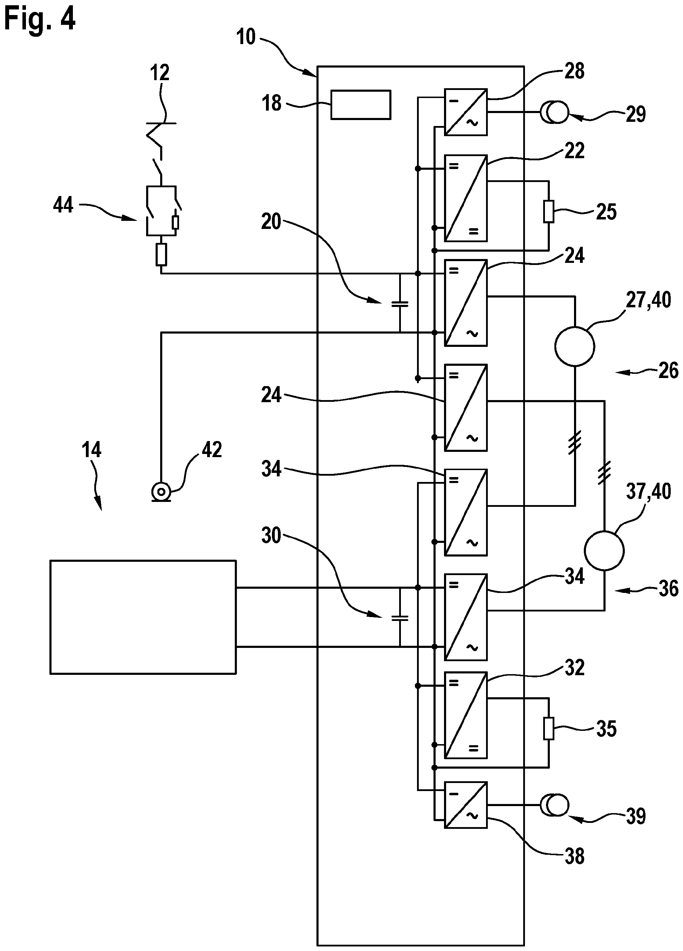

**Fig. 4** shows a block diagram of a propulsion system 10 for a railway vehicle, in accordance with an embodiment of the present invention. The propulsion system 10 shown in figure 4 widely corresponds to the propulsion system 10 described with respect to figure 1. Therefore, in order to provide a concise description of the present invention, only those features of the propulsion system 10 shown in figure 4 are explained in the following, in which the propulsion system 10 shown in figure 4 differs from the propulsion system 10 shown in figure 1.

In the embodiment shown in figure 4, the inductance 40 is provided by at least one of the electric motors 27, 37 of the railway vehicle. For example, the inductance 40 may be provided by utilizing two ends of 3-phase traction motor windings of one or more of the motors 27, 37.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: propulsion system
- 12: catenary
- 14: traction battery system
- 16: traction battery
- 18: controller
- 20: first DC link
- 22: first half-bridge
- 24: first converter
- 25: first resistor
- 26: first motor arrangement
- 27: first motor
- 28: first auxiliary on-board converter
- 29: first auxiliary consumers
- 30: second DC link
- 32: second half-bridge
- 34: second converter
- 35: second resistor
- 36: second motor arrangement
- 37: second motor
- 38: second auxiliary on-board converter
- 39: second auxiliary consumer
- 40: inductance
- 42: ground
- 44: coupling arrangement
- Uc: catenary voltage
- U_{B}: battery voltage

## Claims

1. Method for operating a propulsion system (10) of a railway or heavy haul vehicle in a catenary (12) mode, the propulsion system (10) comprising a first DC link (20) electrically coupling the propulsion system (10) to a catenary (12), a second DC link (30) electrically coupled to a traction battery system (14) of the railway vehicle, a first half-bridge (22) electrically coupled to the first DC link (20), a second half-bridge (32) electrically coupled to the second DC link (30), and an inductance (40) electrically coupling the first half-bridge (22) to the second half-bridge (32), the method comprising:
receiving a first voltage signal which is representative of a first voltage provided by the catenary (12);
receiving a second voltage signal which is representative of a second voltage provided by the traction battery system (14);
comparing the first voltage with the second voltage;
using the first half-bridge (22) as a step-down converter to reduce the first voltage to the second voltage, when the first voltage is higher than the second voltage; and
using the second half-bridge (32) as a step-up converter to increase the first voltage to the second voltage, when the first voltage is lower than the second voltage.

2. Method in accordance with claim 1, wherein
the first half-bridge (22) is used as the step-down converter by sending a first control signal to the first half-bridge (22), and
the first control signal comprises a first modulation being representative of a first amplification factor corresponding to the reduction of the first voltage to the second voltage.

3. Method in accordance with claim 2, wherein
the first control signal is configured such that a first phase of the first half-bridge (22) is switched between positive and negative potential in accordance with the first modulation.

4. Method in accordance with claim 2 or 3, wherein
a second phase of the second half-bridge (32) is kept on the positive potential, while the first half-bridge (22) is used as the step-down converter.

5. Method in accordance with claim 1, wherein
the second half-bridge (32) is used as the step-up converter by sending a second control signal to the second half-bridge (32), and
the second control signal comprises a second modulation being representative of a second amplification factor corresponding to the increment of the first voltage to the second voltage.

6. Method in accordance with claim 5, wherein
the second control signal is configured such that a second phase of the second half-bridge (32) is switched between positive and negative potential in accordance with the second modulation.

7. Method in accordance with claim 5 or 6, wherein
a first phase of the first half-bridge (22) is kept on the positive potential, while the second half-bridge (32) is used as the step-up converter.

8. Method in accordance with one of the preceding claims, comprising:
controlling the first half-bridge (22) and/or the second half-bridge (32) such that at least one traction battery (16) of the traction battery system (14) is charged by the energy provided by the catenary (12) while using the first half-bridge (22) as the step-down converter or when using the second half-bridge (32) as the step-up converter.

9. Method in accordance with one of the preceding claims, wherein the first half-bridge (22) is electrically coupled to and configured for driving at least one first auxiliary consumer (29) of the railway vehicle, and the second half-bridge (32) is electrically coupled to and configured for driving a second auxiliary consumer (39) of the railway vehicle, the method comprising:
driving the first auxiliary consumer (29) by the first voltage from the catenary (12) and driving the second auxiliary consumer (39) by the reduced first voltage, while using the first half-bridge (22) as the step-down converter; and
driving the first auxiliary consumer (29) by the first voltage from the catenary (12) and driving the second auxiliary consumer (39) by the increased first voltage, while using the first half-bridge (22) as the step-up converter.

10. Controller (18) for operating a propulsion system (10) of a railway or heavy haul vehicle in a catenary mode, the propulsion system (10) comprising a first DC link (20) electrically coupling the propulsion system (10) to a catenary (12), a second DC link (30) electrically coupled to a traction battery system (14) of the railway vehicle, a first half-bridge (22) electrically coupled to the first DC link (20), a second half-bridge (32) electrically coupled to the second DC link (30), and an inductance (40) electrically coupling the first half-bridge (22) to the second half-bridge (32), the controller comprising:
an interface for receiving a first voltage signal, which is representative of a first voltage provided by the catenary (12), and a second voltage signal, which is representative of a second voltage provided by the traction battery system (14);
a memory for storing information about the first voltage and about the second voltage; and
a processor being electrically coupled to the interface and the memory and being configured for carrying out the method in accordance with one of the preceding claims.

11. Propulsion system (10) for a railway or heavy haul vehicle, the propulsion system (10) comprising:
a first DC link (20) for electrically coupling the propulsion system (10) to a catenary (12),
a second DC link (30) electrically coupled to a traction battery system (14) of the railway vehicle,
a first half-bridge (22) electrically coupled to the first DC link (20),
a second half-bridge (32) electrically coupled to the second DC link (30),
an inductance (40) electrically coupling the first half-bridge (22) to the second half-bridge (32), and
a controller (18) in accordance with claim 10.

12. Propulsion system (10) in accordance with claim 11, wherein
the inductance (40) is provided by an inductor electrically connecting the first DC link (20) to the second DC link (30).

13. Propulsion system (10) in accordance with claim 11, wherein
the inductance (40) is provided by at least one electric motor (27, 37) of the railway vehicle.

14. Computer program for operating a propulsion system (10) of a railway or heavy haul vehicle in a catenary (12) mode, the computer program being configured to carry out a method in accordance with claim 1 to 9, when being executed by a processor of a controller according to claim 10.

15. Computer-readable medium, on which a computer program in accordance with claim 14 is stored.
